(19) **Europäisches Patentamt**

**European Patent Office**

**Office européen des brevets**

(11) Veröffentlichungsnummer: **0 406 751 A1**

(12) **EUROPÄISCHE PATENTANMELDUNG**

(21) Anmeldenummer: **90112569.0**

(22) Anmeldetag: **02.07.90**

(51) Int. Cl.⁵: **G01K 13/00**

(30) Priorität: **07.07.89 CH 2549/89**

(43) Veröffentlichungstag der Anmeldung:
**09.01.91 Patentblatt 91/02**

(84) Benannte Vertragsstaaten:
**AT BE CH DE ES FR GB IT LI LU NL**

(71) Anmelder: **BALZERS AKTIENGESELLSCHAFT**

**FL-9496 Balzers(LI)**

(72) Erfinder: **Hirscher, Hans, Dr.**
**Churfirstenstrasse 1**
**CH-7310 Bad Ragaz(CH)**
Erfinder: **Moll, Eberhard, Dr.**
**Holzgatter 173**
**FL-9488 Schellenberg(LI)**

(74) Vertreter: **Troesch, Jacques J., Dr. sc. nat. et al**
**Walchestrasse 19**
**CH-8035 Zürich(CH)**

(54) **Verfahren und Anordnung zur Ermittlung von Messdaten während der Behandlung von Scheiben.**

㉗ Es wird vorgeschlagen, um Behandlungsparameter für Scheiben (1) beispielsweise in einem Vakuumbeschichtungsprozess zu erfassen, in die zu behandelnden Scheiben Spionscheiben einzuschleusen, woran Sensoren (3, 3a) vorgesehen sind. Ihre elektrischen Anschlüsse sind an die Peripherie der Scheiben (1) geführt, wo sie von Abgriffen (21) an einer auch für die übrigen zu behandelnden Scheiben vorgesehenen Halterung (13) kontaktiert werden.

FIG. 3

# VERFAHREN UND ANORDNUNG ZUR ERMITTLUNG VON MESSDATEN WÄHREND DER BEHANDLUNG VON SCHEIBEN

Die vorliegende Erfindung betrifft ein Verfahren sowie eine Anordnung zur Ermittlung von Messdaten bezüglich eines Behandlungsprozesses für Scheiben, bei dem anstelle einer zu behandelnden Scheibe ein Messwertaufnehmer mit einer Sensoranordnung der Behandlung aus- oder mitausgesetzt wird, welcher Messdaten an die Behandlungsumgebung liefert.

Bei der Behandlung von Scheiben, sei dies für die Halbleiterherstellung oder für die Speicherplattenherstellung, wie beispielsweise die CD-Herstellung, ist es bekannt, dass die Behandlungsprozesse, wie Beschichtungsprozesse, Aetzprozesse, Wärmebehandlungsprozesse etc., innerhalb je nach Behandlung engerer oder weiterer Toleranz beherrschbar sein müssen.

Wie ein Behandlungsprozess bezüglich seiner Parameter gesteuert werden muss, ist vornehmlich an dem an der Scheibe erwirkten Resultat zu bemessen. Es wurden viele Vorschläge gemacht, Messdaten bezüglich derartiger Behandlungsprozesse zu ermitteln, wobei die Erfassungsschwierigkeiten vornehmlich darin bestehen, dass einerseits die Behandlungsatmosphäre, wie beim Beschichten oder Aetzen von Scheiben, vorgesehene Messanordnungen nicht beeinträchtigen soll und dass anderseits vielfach die zu behandelnden Scheiben während einer betrachteten Behandlung bewegt werden und/oder von Behandlungsstation zu Behandlungsstation transportiert werden, öfters im Rahmen einer Durchlaufbehandlung einer Folge hintereinander anfallender Scheiben.

So ist es aus der DE-OS 34 12 724 bekannt, zum Messen der Schichtdicke und/oder der Konzentration von auf Substratscheiben abgeschiedenen dünnen Schichten während ihrer Herstellung die Schichtdicke zu messen, indem an einem beweglichen Substrathalter Sensoren in Form von Schwingquarzen vorgesehen werden, deren Eigenfrequenz mit zunehmender Beschichtung ändert. Die Messdateninformation, welche in der Schwingfrequenz der Schwingquarze liegt, wird berührungslos durch elektromagnetische Strahlung an die Behandlungsumgebung übertragen.

Ein solches Vorgehen ist insofern nachteilig, als dass wohl in unmittelbarer Nähe der behandelten Substratscheiben gemessen wird, nicht jedoch am eigentlichen Ort des Geschehens, nämlich am Substrat selbst. Im weiteren ist dieses Vorgehen ausserordentlich aufwendig, wenn man die dazu notwendigen Sensoren und Uebertragungsstrecken betrachtet und insbesondere wenn, wie bei den erwähnten Durchlaufbehandlungsprozessen, eine grössere Zahl von Sensoren vorgesehen werden muss, welche, da der Behandlung ausgesetzt, immer wieder ersetzt werden müssen.

Aus der DE-OS 37 10 365 ist es im weiteren bekannt, während der Beschichtung einer Substratscheibe an die entstehende Materialschicht Prüfsignale anzulegen und aufgrund elektrischer Messgrössen an der entstehenden Schicht auf deren Zustand zu schliessen. Hier wird an der entstehenden Schicht selbst gemessen, somit im obgenannten Sinne am Orte des Geschehens, aber die Messanordnung ist ausserordentlich aufwendig und bedarf vorgängig aufwendiger Eichprozeduren.

Im weiteren muss bedacht werden, dass bei elektrischer Ausmessung der entstehenden Schicht, wie bei Impedanzmessung, die Schichtflächenausdehnung mit zu berücksichtigen ist.

Aus den DE-OS'en 34 05 559, 34 05 596, 34 05 625 ist es im weiteren bekannt, insbesondere auch, um, im obgenannten Sinne, definierte Ausdehnungsverhältnisse zu schaffen, der Behandlung ein Referenzsubstrat auszusetzen, am Substrathalter Messfühler anzuordnen und die sich bei der Behandlung einstellenden Messdaten drahtlos an die Behandlungsumgebung zu übermitteln. Auch hier ist der getriebene Aufwand gross, insbesondere auch deshalb, weil vorgesehene Sensoren am Substrathalter mindestens teilweise der Behandlung direkt ausgesetzt sind und deshalb ausgewechselt werden müssen. Auch müssen eigens dafür dimensionierte Referenzsubstrate bereitgestellt werden.

Im weiteren ist es nun aus der Firmenschrift "MBB-Wafer-Telemetrie-System", MBB Industrieerzeugnisse, Datentechnik, aus dem Jahre 1987 bekannt, anstelle eines zu behandelnden Substrates einen Messwertaufnehmer der Behandlung auf- oder mitaufzusetzen, in welchem, in einem Gehäuse, allenfalls mit Blende und darunter einem der Behandlung mitausgesetzten Referenzsubstrat, Sensoren vorgesehen sind. Von diesem Messwertaufnehmer werden, drahtlos, Messdaten an die Behandlungsumgebung übertragen. Auch hier ist der Aufwand insbesondere dann, wenn Messdaten in einem Durchlaufbehandlungsprozess ermittelt werden sollen, gross, und auch hier muss der Messwertaufnehmer je nach Behandlung, welcher er ausgesetzt war, in aufwendiger Art und Weise jeweils wieder aufgefrischt werden.

Die vorliegende Erfindung setzt sich zum Ziel, Nachteile der obgenannten Art zu beheben. Dies wird, ausgehend von einem Vorgehen der letztgenannten Art, dadurch erreicht, dass mindestens eine Scheibe mit einer Sensoranordnung versehen wird und als zu behandelnde Scheibe der Behandlung zugeführt wird.

Dabei wird erfindungsgemäss von der Einsicht ausgegangen, dass zu behandelnde Scheiben selbst, bei deren Fehlbehandlung ohnehin mit relativ grossen Ausschusszahlen zu rechnen ist, in ausgezeichneter Art und Weise sich als Messwertaufnehmerträger eignen, da sich ja ein "Behandlungsbeobachter" auf einer solchen Scheibe auch befinden müsste. Solche eigentliche "Spionscheiben" können dabei so ausgelegt werden, dass ihre Form und Materialstruktur nur minimal von den eigentlichen, zu behandelnden Scheiben abweichen, womit daran ermittelte Messdaten optimal repräsentativ für das Geschehen an den eigentlich zu behandelnden Scheiben sind. Somit werden als Sensorträgerscheiben vorzugsweise die zu behandelnden Scheiben eingesetzt. Um gewisse oder alle Sensoren der Behandlung, bei mehreren sukzessiven Behandlungen allenfalls ausgewählten, zu entziehen, können solche Sensoren versiegelt werden, d.h. mit einer Schutzschicht versehen werden, wie z.B. aus $SiO_2$.

Dabei ergibt sich bei Vorgehen gemäss Anspruch 2 eine äusserst einfache Möglichkeit, die Sensoranordnung an den damit ausgerüsteten Scheiben (elektrisch abzugreifen und allenfalls auch elektrisch zu speisen. Eine mechanische Halterung ist in vielen Fällen ohnehin notwendig, beispielsweise in den Fällen, in denen die Scheibe während der Behandlung auf einem Gaskissen ruht, welches, zur Erhöhung der Wärmeleitung, über einer Heiz- oder Kühleinrichtung für das Substrat vorgesehen ist, oder in den Fällen, in denen das Substrat während der Behandlung bewegt wird.

Eine solche mechanische Halterung wirkt dann als solche auf alle zu behandelnden Scheiben und zusätzlich, auf die mit der Sensoranordnung versehenen, als elektrische Kontaktierung.

Im weiteren wird gemäss Wortlaut von Anspruch 3 eine kostengünstige Bereitstellung von mit Sensoranordnungen versehenen "Spionscheiben" vorgeschlagen, insbesondere mit dem Vorteil, dass die in Dünnfilmtechnik aufgebrachten Sensorelemente, wie Widerstandsbrücken, Kapazitätsbrücken, Schwingkreise, vorzugsweise verteilt über der Scheibenoberfläche, die der Behandlung ausgesetzte Oberfläche kaum verändern im Sinne einer Formstrukturierung und mithin äusserst geeignet sind, repräsentative Messresultate über die an Ort erfassten Behandlungsparameter zu liefern. Eine flächige Verteilung solcher Sensorelemente ergibt auch ein Bild über die Flächenverteilung der Intensitäten interessierender gemessener Behandlungsparameter.

Ganz besonders eignet sich das vorgeschlagene Vorge hen für Durchlaufbehandlungsprozesse, bei denen eine Folge von Scheiben sukzessive der Behandlung zugeführt wird. Hier ist es praktisch nicht möglich, teure Messwertaufnehmer in die Folge einzuschleusen, denn der hierzu zu betreibende Aufwand wäre sehr gross. Zudem sind die aus dem obgenannten Stande der Technik eingeführten Messwertaufnehmer insbesondere in ihrer Dicke abweichend von den zu behandelnden Scheiben ausgebildet, derart, dass in Durchlaufbehandlungsprozessen, mit den auf die Scheiben spezifisch ausgelegten Transport-, Uebernahme- und Greiferanordnungen, derartige Messwertaufnehmer gar nicht ohne weiteres, d.h. ohne Anpassungen, gehandhabt werden können.

Anders verhält es sich bei den erfindungsgemäss vorgeschlagenen, mit den Sensoranordnungen versehenen Scheiben, die, gleich wie Scheiben ohne Sensoranordnungen, durch die bereits bestehenden bekannten Geräte gehandhabt werden können. Damit ist die Möglichkeit geschaffen, in eine Folge von Scheiben die erwähnten "Spione" einzuschleusen und, nach Massgabe der Dichte, mit welcher solche Spione eingeschleust werden, getaktet, die erforderte Messdateninformation zu erhalten.

Während das Informationsbedürfnis über interessierende Behandlungsparameter dann geringer ist, wenn, beispielsweise aus der Erfahrung bekannt, in einer Behandlungsphase diese Parameter wenig verändert werden oder unkritisch sind, kann das diesbezügliche Informationsbedürfnis in Behandlungsphasen wesentlich höher sein, in denen ein betrachteter Behandlungspara meter kritischer ist oder sich rasch ändert.

Diesem Bedürfnis kann nach dem Wortlaut von Anspruch 7 Rechnung getragen werden, indem die Dichte eingeschleuster Spionscheiben entsprechend erhöht oder erniedrigt wird. Durch Erfassung der Aenderungsrate interessierender Behandlungsparameter kann allenfalls eine solche Dichtesteuerung auch automatisch erfolgen, indem dann, wenn registriert wird, dass sich ein interessierender Parameter rasch ändert, die Dichte eingeschleuster Spionscheiben erhöht wird. Dies beispielsweise, indem magazinierte Spionscheiben gesteuert in die Abfolge zur Behandlung anfallender Scheiben eingefügt werden.

Gemäss Wortlaut von Anspruch 8 wird nun weiter vorgeschlagen, das erfindungsgemässe Ermittlungsverfahren als Regelgrössenaufnahmeverfahren in einem Regelkreis einzusetzen und diesen nach den Gesetzmässigkeiten zeitdiskreter Regelkreise auszulegen. Durch die in die Folge von Scheiben eingeschleusten Spionscheiben wird nämlich eine zeitdiskrete Messdatenentnahme realisiert.

Eine erfindungsgemässe Anordnung zur Ermittlung der erwähnten Messdaten mit bevorzugten Ausführungsvarianten ist in den Ansprüchen 9 ff spezifiziert.

Die Erfindung wird anschliessend beispielsweise anhand von Figuren erläutert.

Es zeigen:

Fig. 1 schematisch eine Aufsicht auf eine erfindungsgemässe, mit einer Sensoranordnung versehene Scheibe, z.B. einer Halbleiterscheibe oder einer Scheibe für die Herstellung von Speicherplatten,

Fig. 2 schematisch eine normal zu behandelnde Scheibe, z.B. eine Halbleiterscheibe oder eine Scheibe für die Herstellung von Speicherplatten, in einer erfindungsgemässen Haltevorrichtung für die Scheibe in Bearbeitungsposition,

Fig. 3 dieselbe, in Fig. 2 dargestellte Haltevorrichtung, nun mit ihrer Wirkung an einer erfindungsgemäss vorgesehenen Scheibe mit Sensoranordnung,

Fig. 4 schematisch eine Querschnittsdarstellung durch eine Anordnung gemäss Fig. 3 mit gefederten Kontakten zum Abgriff oder Zuspeisen elektrischer Signale von oder an die Scheibe gemäss Fig. 3,

Fig. 5 ein Signalfluss-/Funktionsblockdiagramm einer erfindungsgemässen Anordnung für Durchlaufbehandlung von Scheiben und mit allenfalls gesteuerter Einfügungsrate erfindungsgemäss mit Sensoren versehener Scheiben in die Folge der Behandlung zugeführter Scheiben,

Fig. 6 ein Signalfluss-/Funktionsblockdiagramm ei nes erfindungsgemässen Regelkreises, bei dem das erfindungsgemässe Verfahren zur Ermittlung von Messdaten als Regelgrössenaufnahmeverfahren eingesetzt ist,

Fig. 7 die Auslegung einer erfindungsgemässen Scheibe, mit verteilten Widerstandsmessbrücken, in Dünnfilmtechnik gefertigt.

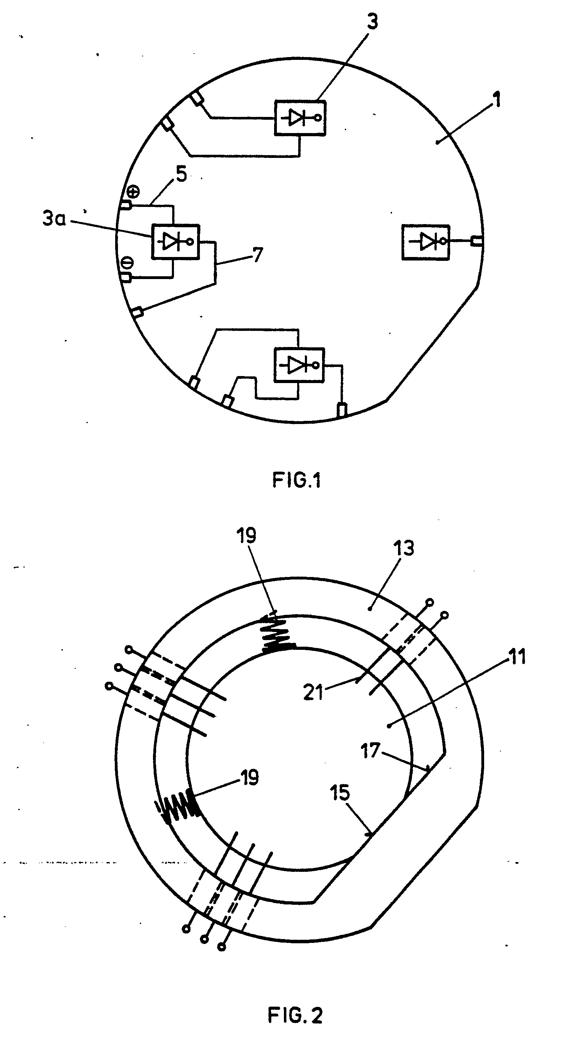

In Fig. 1 ist, schematisch, eine erfindungsgemäss eingesetzte "Spionscheibe" 1 dargestellt. Es handelt sich dabei um eine Scheibe gleicher Art, wie sie im jeweils betrachteten Herstellungsprozess behandelt wird, so beispielsweise um eine Halbleiterscheibe oder um eine Kunststoffscheibe bei der Herstellung von Speicherplatten.

Auf der Scheibe 1 sind, vorzugsweise über deren Oberfläche verteilt, Sensoren 3 vorgesehen, wobei es sich um passive Sensoren handeln kann, wie um Widerstände, Kapazitäten, Induktivitäten oder beliebige Kombinationen davon. Es kann sich dabei aber auch, wie bei 3a dargestellt, um aktive Sensoren handeln, welche elektrisch gespiesen werden müssen.

Die erwähnten Sensoren 3, 3a sind, an der Scheibe 1, der jeweiligen Behandlung vorzugsweise direkt ausgesetzt, so dass, beispielsweise bei einer Beschichtung, direkt, z.B. an einer Widerstandsmessbrücke, die Verteilung eines leitenden Schichtmaterials erfasst werden kann oder z.B. die örtliche und/oder zeitliche Temperaturverteilung, wofür dann die Spionscheibe 1 dieselbe Wärmekapazität und dieselben Wär mestrahlungskoeffizienten hat wie zu behandelnde Scheiben. Ebenso können passive Schwingkreise auf der Scheibe ausgebildet sein, oder aber es können aktive Bauelemente vorgesehen sein, wie Infrarotdetektoren etc. Die wie auch immer ausgebildeten Sensoren 3 bzw. 3a weisen elektrische Zuführleitungen 5, wie für die elektrische Speisung, und insbesondere elektrische Ausgangssignalleitungen 7 auf, welche an die Peripherie der Scheibe 1 geführt sind.

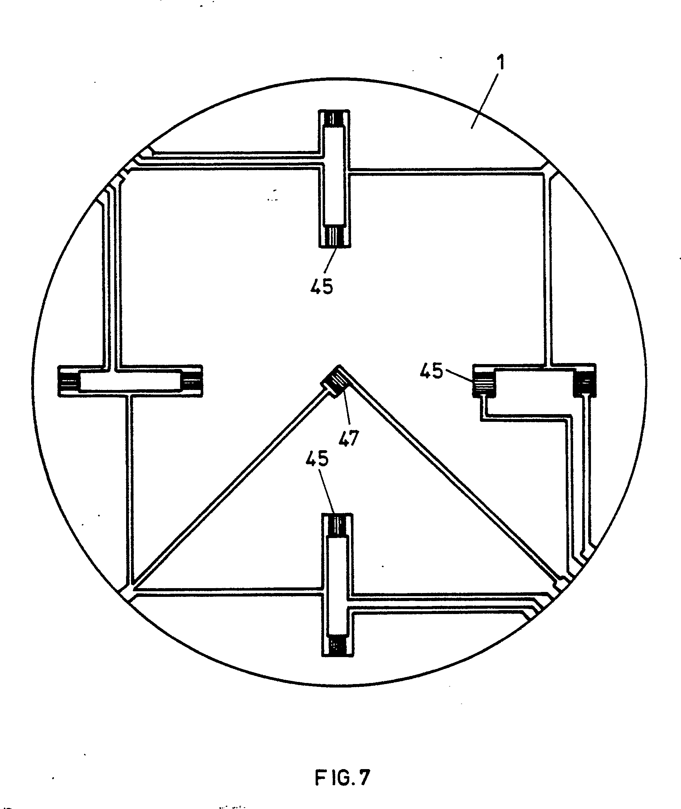

Bevorzugterweise, und wie anhand von Fig. 7 gezeigt, sind die Sensoren und/oder Leitungen, vorzugsweise beide, in Dünnfilmtechnik auf der Scheibe 1 aufgebracht.

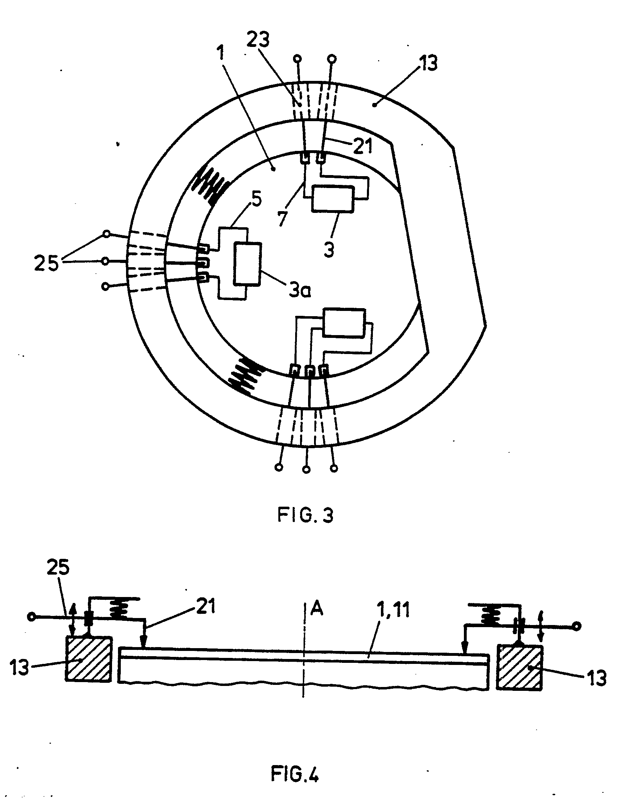

In den Fig. 2 und 3 ist, in Aufsicht, eine bevorzugte Anordnung zum Abgreifen bzw. Zuführen elektrischer Signale von bzw. an die erfindungsgemässe Scheibe 1 dargestellt.

In Fig. 2 ist vorerst eine normale, zu behandelnde Scheibe 11 gezeigt, ohne aufgebrachte Sensoranordnung 3, 3a. Wie in vielen Behandlungsprozessen notwendig, ist für die Scheibe 11 eine Halteanordnung vorgesehen, wie gezeigt in Form eines die Scheibe 11 umfassenden Rahmens 13. Auch bei üblicher Behandlung derartiger Scheiben 11, wie beispielsweise von Halbleiterscheiben mit einem Flat 15, wird die Scheibe vor der Behandlung exakt positioniert, d.h. orientiert und zentriert. Dies erfolgt in der schematischen Darstellung gemäss Fig. 2 dadurch, dass der Flat 15 der Scheibe 11 an eine Anschlagfläche 17 des Rahmens 13 gelegt wird, durch Wirkung vorgesehener Federorgane 19, die zwischen Rahmen 13 und dem Rand der Scheibe 11 wirken. Die axiale Halterung der Scheibe 11 erfolgt durch randständig auf die Scheibe eingreifende Stifte 21. Der Rahmen 13 kann dabei während der Behandlung mit seinem Gewicht auf der Scheibe 11 bzw. der Spionscheibe 1 ruhen.

In Fig. 3 ist nun eine erfindungsgemässe "Spionscheibe" 1 in die in Fig. 2 dargestellte Halteanordnung eingelegt. Daraus wird nun die zweifache Funktion der Halteanordnung ersichtlich: Dank der Positionierungsvorkehrungen an der Halteanordnung - am Rahmen 13 -für die Scheibe 11 ebenso wie für die "Spionscheibe" 1 wird letztere in exakt vorgegebene Position gebracht. Dabei greifen nun gemäss Fig. 3 die Stifte 21 auf die elektrischen Leiter 7 bzw. 5, welche von bzw. zu den Sensoren 3a bzw. 3 führen. Die Stifte 21 sind elektrisch gegeneinander isoliert, wie gestrichelt mit den Durchführungen 23 dargestellt, und weisen Anschlüsse 25 auf, an welchen die von den Sensoren 3 bzw. 3a bereitgestellten Signale abgegriffen werden bzw. über die Signale, wie Speisesignale, den Sensoren 3a zugeführt werden.

Da an der erfindungsgemässen Scheibe 1 eine Vielzahl von Sensoren flächig verteilt vorgesehen werden kann und eine statisch nicht überbestimmte starre axiale Halterung lediglich drei Stifte 21 notwendig macht, ist es im Falle des Einsatzes der Haltestifte 21 als Kontaktstifte notwendig, wie in Fig. 4 schematisch dargestellt, letztere in Achsrichtung A federnd auszubilden und an die Scheibe 1 anzulegen. Dies kann beispielsweise durch Verwendung in Axialrichtung fe dernder Stifte auf einfachste Art und Weise realisiert werden.

Wie aus dem Quervergleich der beiden Fig. 2 und 3 ersichtlich, werden normale zu behandelnde Scheiben 11 und eingeschleuste "Spionscheiben" 1 exakt gleich mit Bezug auf die Halterung, d.h. den Rahmen 13, behandelt, so dass keinerlei Anpassungen beim Einsatz der erfindungsgemässen Scheiben 1 notwendig sind, weder an der Halterung 13 noch an weiteren Transport- und anderen Handling-Geräten an der Behandlungsanlage für derartige Scheiben.

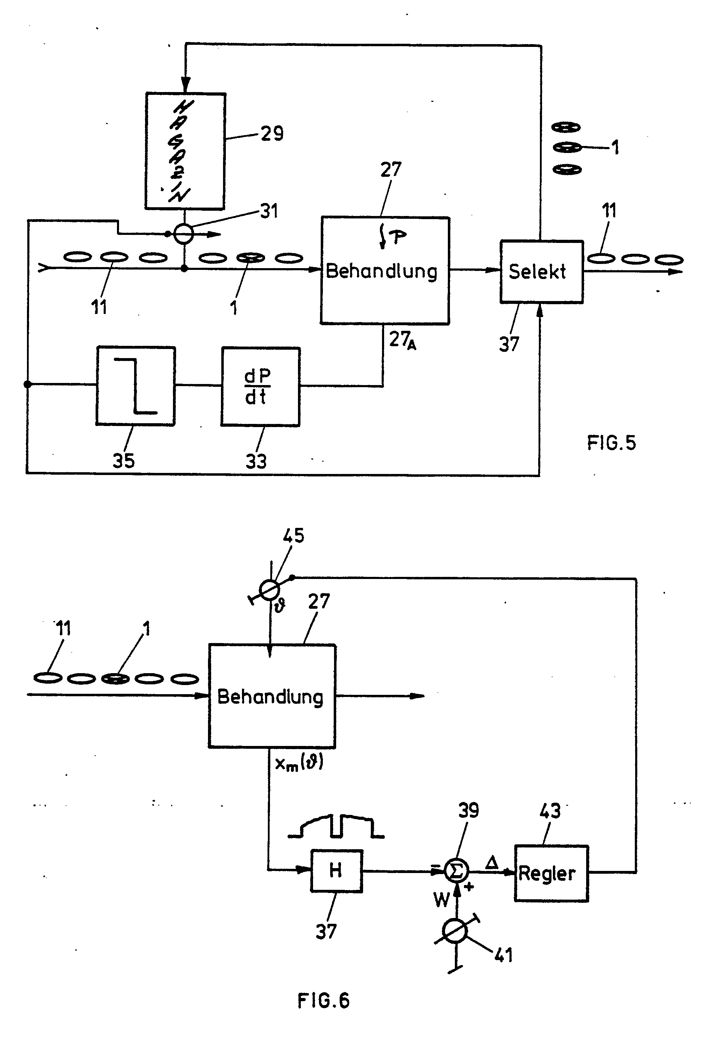

In Fig. 5 ist ein Funktionsblock-/Signalflussdiagramm einer erfindungsgemässen Scheibenbehandlungsanlage dargestellt.

In üblicher Art und Weise, über Schleusen etc., wird einer Behandlungskammer 27, beispielsweise einer Vakuumkammer, eine Folge von Scheiben 11 für die Behandlung zugeführt. Hierzu sind bekannte, hier nicht weiter interessierende Transport- und Handling-Geräte vorgesehen. Bevor die zu behandelnden Scheiben 11 der Behandlungsstation 27 zugeführt werden, werden ihrer Folge, über eine Magazinieranordnung 29, vorzugsweise durch einen gesteuerten Magazinauslass 31, erfindungsgemässe, d.h. mit Sensoren versehene Scheiben 1 eingefügt. Diese "Spionscheiben" 1 gelangen genau gleich wie die normalen zu behandelnden Scheiben 11 in die Behandlungskammer 27 und geben während ihrer Behandlung, über ihre Sensoren 3, 3a und vorzugsweise die anhand von Fig. 2 bis 4 dargestellten Abgriffe, die erfassten Messdaten an Ausgängen 27A der Behand lungsstation 27 ab.

Wie beispielsweise dargestellt, werden nun die erfassten Messdaten beispielsweise in der Zeit, wie im Block 33 dargestellt, differenziert, die zeitliche Ableitung auf Erreichen eines Grenzwertes, wie im Block 35 dargestellt, untersucht, und je nachdem wird, wenn das Verhalten der erfassten Messdaten es anzeigt, beispielsweise sich in der Zeit relativ rasch ändert, die vom Magazin 29 ausgegebene Dichte erfindungsgemässer Spionscheiben 1 über die steuerbare Ausgabevorrichtung 31 erhöht oder erniedrigt. Ausgangsseitig der Behandlungsstation 27 kann dabei eine Selektionseinheit 37 vorgesehen sein, bei welcher die erfindungsgemässen Spionscheiben 1 wieder ausselektiert werden und, sofern noch brauchbar, dem Magazin 29 wieder zugeführt oder andernfalls ausgeschieden. Dabei werden die Spionscheiben vor Rückführung in das Magazin allenfalls wieder aufgefrischt, so z.B. bei versiegelten Sensoren die Versiegelung erneuert. Die behandelten Scheiben 11 werden ihrer weiteren Destination zugeführt.

In Fig. 6 ist anhand eines Funktionsblock-/Signal-flussdiagrammes dargestellt, wie das erfindungsgemässe Verfahren zur Ermittlung der erwähnten Messdaten in einem Regelkreis für Behandlungsparameter an der Behandlungsstation 27 eingesetzt werden kann. Es werden wiederum der Behandlungskammer 27, wie einer Vakuumbehandlungskammer, zu behandelnde Scheiben 11 zugeführt, worunter, eingefügt, die erfindungsgemässen "Spionscheiben" 1 mit je einer Sensoranordnung. Die durch die Sensoranordnung an den "Spionscheiben" 1 ermittelten und an die Behandlungsumgebung übertragenen Messwerte werden als gemessene Regelgrösse $x_m$ in Form von zeitdiskreten Signalen, wie schematisch dargestellt, vorerst beispielsweise einer Hold-Schaltung 37 zugespiesen, deren Ausgangssignal auf eine Differenzeinheit 39 geschaltet ist. An letzterer wird das Ausgangssignal der Hold-Schaltung mit einem an einer einstellbaren Signalquelle 41 einstellbaren Führungssignalwert W verglichen und die Differenz $\Delta$ als Regeldifferenz über einen Regler 43 schliesslich einem Stellglied 45 für einen Behandlungsparameter, beispielsweise den der gemessenen Regelgrösse $x_m$ entsprechenden, wie beispielsweise für die Temperatur $\vartheta$ in der Behandlungskammer 27, zugeführt.

Das Tastverhältnis der zeitdiskret gemessenen Regelgrösse $x_m$ wird durch die Dichte der erfindungsgemässen "Spionscheiben" 1 in der Folge zu behandelnder Scheiben 11 festgelegt.

In Fig. 7 ist ein Ausführungsbeispiel einer erfindungsgemässen Scheibe 1 dargestellt. Auf ihr sind, in der bevorzugten Ausführungsvariante in Dünnfilmtechnik, verteilt über ihrer Oberfläche, Widerstandsbrücken 45 vorgesehen, deren Anschlüsse, wie anhand der Fig. 1 erläutert wurde, an die Peripherie geführt sind, um mittels einer Haltevorrichtung, wie sie anhand der Fig. 2 und 3 erläutert wurde, abgegriffen zu werden. Im Zentrum der Scheibe 1 ist ein weiterer Sensor in Form eines Widerstandselementes 47 vorgesehen, beispielsweise zur Messung der Behandlungstemperatur oder deren Verlauf an dieser Stelle oder einer aufgebrachten Beschichtung.

Das vorgeschlagene Verfahren und die Anordnung hierfür eignen sich ausgezeichnet, um in Behandlungsprozessen für Halbleiter-Wafern oder von Scheiben für Speicherplatten eingesetzt zu werden.

**Ansprüche**

1. Verfahren zur Ermittlung von Messdaten bezüglich eines Behandlungsprozesses für Scheiben, bei dem anstelle einer zu behandelnden Scheibe ein Messwertaufnehmer mit einer Sensoranordnung der Behandlung ausoder mitausgesetzt wird, welcher Messdaten an die Behandlungsumgebung liefert, dadurch gekennzeichnet, dass mindestens eine Scheibe mit einer Sensoranordnung versehen wird und als zu behandelnde Scheibe der Behandlung zugeführt wird.

2. Verfahren, vorzugsweise nach mindestens einem der Ansprüche, wie nach Anspruch 1, dadurch gekennzeichnet, dass zu behandelnde Scheiben mindestens während der Behandlung mechanisch gehaltert werden und die mechanische Halterung an den Scheiben mit der Sensoranordnung als elektrische Kontaktierung für die Sensoranordnung eingesetzt wird.

3. Verfahren, vorzugsweise nach mindestens einem der Ansprüche, wie nach einem der Ansprüche 1 oder 2, dadurch gekennzeichnet, dass die Sensoranordnung in Dünnfilmtechnik auf die Scheibe aufgebracht wird und vorzugsweise passive Messfühler aufweist, wie Widerstände, Kapazitäten, Induktivitäten oder beliebige Kombinationen solcher Elemente.

4. Verfahren, vorzugsweise nach mindestens einem der Ansprüche, wie nach einem der Ansprüche 1 bis 3, dadurch gekennzeichnet, dass auf der Scheibenoberfläche die Sensoranordnung mit verteilten Sensoren vorgesehen wird.

5. Verfahren, vorzugsweise nach mindestens einem der Ansprüche, wie nach einem der Ansprüche 1 bis 4, bezüglich eines Durchlaufbehandlungsprozesses, bei dem eine Folge von Scheiben sukzessive der Behandlung zugeführt wird, dadurch gekennzeichnet, dass in die Folge eine Mehrzahl von Scheiben je mit Sensoranordnung eingefügt wird.

6. Verfahren, vorzugsweise nach mindestens einem der Ansprüche, wie nach Anspruch 5, dadurch gekennzeichnet, dass die Scheiben in die Folge in regelmässigen Abständen eingeführt werden.

7. Verfahren, vorzugsweise nach mindestens einem der Ansprüche, wie nach einem der Ansprüche 5 oder 6, dadurch gekennzeichnet, dass die Dichte von Scheiben in der Folge steuerbar ist und vorzugsweise in Behandlungsphasen mit grossem Informationsdichtebedürfnis grösser gewählt wird als in anderen.

8. Verfahren zur Regelung mindestens eines Parameters eines Behandlungsprozesses für Scheiben, der als Durchlaufbehandlungsprozess ausgebildet ist, in dem eine Folge von Scheiben sukzessive der Behandlung zugeführt wird, dadurch gekennzeichnet, dass die Regelung als zeitdiskrete Regelung ausgelegt ist und ein Ermittlungsverfahren nach mindestens einem der Ansprüche 5 bis 7 als getaktetes Regelgrössenaufnahmeverfahren eingesetzt wird.

9. Anordnung zur Ermittlung von Messdaten bezüglich eines Behandlungsprozesses für Scheiben, bei dem anstelle einer zu behandelnden Scheibe ein Messwertaufnehmer mit einer Sensoranordnung der Behandlung aus-oder mitausgesetzt wird, welcher Messdaten an die Behandlungsumgebung liefert, dadurch gekennzeichnet, dass der Messwertaufnehmer eine mindestens im wesentlichen geometrisch den zu behandelnden Scheiben gleiche Scheibe (1) ist mit einer aufgebrachten Sensoranordnung (3, 3a, 45, 47).

10. Anordnung, vorzugsweise nach mindestens einem der Ansprüche, wie nach Anspruch 9, dadurch gekennzeichnet, dass eine mechanische Halterung (13) für die Scheiben vorgesehen ist, die mindestens an Abschnitten mindestens eine der Scheibenflächen peripher übergreift und dass, einerseits, an dieser Scheibenfläche elektrische Leiter (5, 7) zwischen den Sensoren (3, 3a) und der Peripherie vorgesehen sind, vorzugsweise Leiterbahnen, anderseits an der Halterung (13) voneinander isolierte Kontakte (21) zum Eingreifen auf die Leiter (5, 7) an der Scheibenperipherie.

11. Anordnung, vorzugsweise nach mindestens einem der Ansprüche, wie nach Anspruch 10, dadurch gekennzeichnet, dass die Halterung (13) peripher einragende Finger (21) umfasst, die zusätzlich als Kontaktfinger wirken.

12. Anordnung, vorzugsweise nach mindestens einem der Ansprüche, wie nach einem der Ansprüche 9 bis 11, dadurch gekennzeichnet, dass die Sensoranordnung in Dünnfilmtechnik (45, 47) ausgebildet ist.

13. Anordnung, vorzugsweise nach mindestens einem der Ansprüche, wie nach einem der Ansprüche 9 bis 12, dadurch gekennzeichnet, dass die Sensoranordnung (3, 3a, 45, 47) über die Scheibenoberfläche verteilte Sensorelemente aufweist.

14. Anordnung, vorzugsweise nach mindestens einem der Ansprüche, wie nach einem der Ansprüche 9 bis 13, dadurch gekennzeichnet, dass die Sensoranordnung Widerstandselemente, Kapazitätselemente, Induktivitätselemente oder beliebige Kombinationen hiervon umfasst.

15. Anordnung, vorzugsweise nach mindestens einem der Ansprüche, wie nach einem der Ansprüche 9 bis 14, zur Ermittlung von Messdaten an einem Durchlaufbehandlungsprozess für Scheiben, bei welchem die zu behandelnden Scheiben (11) sukzessive in einer Folge einer Behandlungsstation (27) zugeführt werden, dadurch gekennzeichnet, dass eine Mehrzahl von Scheiben (1) je mit Sensoranordnung (3, 3a, 45, 47) in der Folge zu behandelnder Scheiben (11) eingefügt ist.

16. Anordnung, vorzugsweise nach mindestens einem der Ansprüche, wie nach Anspruch 15, dadurch gekennzeichnet, dass eine Magazinanordnung (29) für Scheiben je mit Sensoranordnung (3, 3a, 45, 47) vorgesehen ist, mit deren Hilfe, vorzugsweise gesteuert (31), die Scheibe (1) mit den Sensoren in vorgegebener Dichte in die Folge zur Behandlung gelangender Scheiben (11) eingefügt wird.

17. Regelkreis für mindestens einen Behandlungsparameter bei der Durchlaufbehandlung von Scheiben, wobei einer Behandlungsstation (27) zu behandelnde Scheiben (11) sukzessive in einer Folge zugeführt werden, dadurch gekennzeichnet, dass eine Anordnung nach mindestens einem der Ansprüche 9 bis 15 als Regelgrössenaufnehmeranordnung vorgesehen ist und der Regelkreis zur Behandlung zeitdiskreter Regelgrössensignale ausgelegt ist.

18. Scheibe zur Ermittlung von Messdaten bezüglich eines Behandlungsprozesses für Scheiben, dadurch gekennzeichnet, dass sie (1) mindestens einen Sensor (3, 3a, 45, 47) mit an ihre Peripherie geführten elektrischen Verbindungen umfasst.

19. Scheibe nach Anspruch 18, dadurch gekennzeichnet, dass die Sensoranordnung in Dünnfilmtechnik ausgebildet ist.

20. Scheibe, vorzugsweise nach mindestens einem der Ansprüche, wie nach einem der Ansprüche 18 oder 19, dadurch gekennzeichnet, dass, an ihrer Oberfläche verteilt, mehrere Sensoren vorgesehen sind.

21. Scheibe, vorzugsweise nach mindestens einem der Ansprüche, wie nach einem der Ansprüche 18 bis 20, dadurch gekennzeichnet, dass die Sensoranordnung Widerstands-, Kapazitäts- und/oder Induktivitätselemente umfasst oder eine beliebige Kombination derartiger Elemente.

22. Halterahmen für die Halterung von Scheiben während ihrer Behandlung, dadurch gekennzeichnet, dass er, zur Uebermittlung auf der Scheibe ermittelter Messdaten, voneinander isolierte elektrische Abgriffkontakte aufweist.

23. Halterahmen nach Anspruch 22, dadurch gekennzeichnet, dass er mit einer Orientierungs- und/oder Zentrieranordnung für die Scheibe zusammenwirkt oder selbst eine solche Anordnung aufweist, um die Abgriffkontakte auf elektrische Leiterpartien an der Scheibe auszurichten.

24. Anwendung des Verfahrens nach einem der Ansprüche 1 bis 8 oder der Anordnung nach einem der Ansprüche 9 bis 16 oder des Regelkreises nach Anspruch 17, der Scheibe nach einem der Ansprüche 18 bis 21 oder des Halterahmens nach einem der Ansprüche 22, 23 für die Halbleiter-Scheibenherstellung oder für die Herstellung von Speicherscheiben, wie von CD-Scheiben.

FIG.1

FIG. 2

FIG. 3

FIG.4

FIG.5

FIG.6

10

FIG. 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-3 715 231 (SIEMENS) <br> * Spalte 2, Zeile 57 - Spalte 4, Zeile 31; Fig. * | 1,9 | G 01 K 13/00 |
| A | --- | 5 | |
| Y | JP-A-62 139 338 (NEC) <br> * Zusammenfassung; Fig. * | 1,9 | |
| A | --- | 3,18,24 | |
| Y | IBM TECHNICAL DISCLOSURE BULLETIN, Band 20, Nr. 5, Oktober 1977, Seite 1889, New York, US; G.P. BUHARIN et al.: "Thick-film thermocouple" <br> * Das ganze Dokument * | 1,9 | |
| A | IDEM <br> --- | 4,6 | |
| A | US-A-3 462 317 (MOTOROLA) <br> * Das ganze Dokument * | 1,4-6,9 | |
| A | JP-A-60 230 026 (MITSUBISHI) <br> * Zusammenfassung; Fig. * | 1,2,9 | RECHERCHIERTE SACHGEBIETE (Int. Cl.5) |
| A | IBM TECHNICAL DISCLOSURE BULLETIN, Band 14, Nr. 11, April 1972, Seite 3227, New York, US; K.A. CARLSON et al.: "Dynamic thermocouple probe for slip chip joining furnace" <br> * Das ganze Dokument * <br> ----- | 1,3,9 | G 01 K |

Der vorliegende Recherchenbericht wurde für alle Patentansprüche erstellt

| Recherchenort | Abschlußdatum der Recherche | Prüfer |
|---|---|---|
| DEN HAAG | 23-08-1990 | RAMBOER P. |

EPO FORM 1503 03.82 (P0403)